# EUROPEAN PATENT APPLICATION

(11) **EP 4 060 530 A1**
(43) Date of publication of application: **21.09.2022**
(21) Application number: 20911131.9
(22) Date of filing: 30.09.2020
(51) Int. Cl.: G06F 21/45

(54) **DATA MANAGEMENT METHOD AND DEVICE**

(30) Priority: 30.12.2019 CN 201911405795
(71) Applicant: Huawei Technologies Co., Ltd., Shenzhen, Guangdong 518129 (CN)
(72) Inventor: GAO, Bin, Shenzhen, Guangdong 518129 (CN)
(74) Representative: Gill Jennings & Every LLP
(86) International application number: PCT/CN2020/119356
(87) International publication number: WO 2021/135483

(57) **Abstract**

Embodiments of this application provide a data management method and apparatus, and relate to the field of data management, to implement trusted data management. The method includes: A data management apparatus determines an association relationship between first service data and first authorization information based on an association relationship between a first source file and the first authorization information, where the first service data is data obtained based on the first source file; and the data management apparatus manages the first service data based on the first authorization information. The embodiments of this application may be applied to a legal and compliant use scenario of service data after the service data is authorized, and are used to quickly and accurately trace information such as a use scope, a validity period, and a user of the service data. Based on this technology, unauthorized use can be effectively limited.

## Description

This application claims priority to Chinese Patent Application No. 201911405795.3, filed with the China National Intellectual Property Administration on December 30, 2019 and entitled "DATA MANAGEMENT METHOD AND APPARATUS", which is incorporated herein by reference in its entirety.

### TECHNICAL FIELD

Embodiments of this application relate to the field of data management, and in particular, to a data management method and apparatus.

### BACKGROUND

Countries/organizations impose stricter requirements on data security, and legal and compliant use of data (within an authorization scope/authorization period) is especially an important requirement. However, there is a good data tracing method in the industry currently. It is difficult to identify a user of data, whether the data can be used in a current region/country, and whether all data can be deleted after the data expires.

In a conventional technology, an original file may be associated with an authorization scope/authorization period of the original file, and a corresponding authorization scope/authorization period is queried by using the original file.

However, for data derived after original data is parsed, the authorization scope/authorization period of the original file is lost. As a result, accurate legal and compliant use management cannot be performed on the data derived after the original data is parsed.

### SUMMARY

Embodiments of this application provide a data management method and apparatus, to implement trusted data management.

To achieve the foregoing objective, the embodiments of this application provide the following technical solutions:

According to a first aspect, an embodiment of this application provides a data management method. The method includes: A data management apparatus determines an association relationship between first service data and first authorization information based on an association relationship between a first source file and the first authorization information, where the first service data is data obtained based on the first source file. The data management apparatus manages the first service data based on the first authorization information.

This embodiment of this application provides the data management method. In the method, the data management apparatus determines the association relationship between the first service data and the first authorization information based on the association relationship between the first source file and the first authorization information. In this way, authorization information can be associated with a service data granularity. Then, the data management apparatus manages the first service data based on the first authorization information associated with the first service data, so that each piece of service data can be accurately managed. This embodiment of this application may be applied to a legal and compliant use scenario of service data after the service data is authorized, and is used to quickly and accurately trace information such as a use scope, a validity period, and a user of the service data. Based on this technology, unauthorized use can be effectively limited.

In a possible implementation, the first authorization information includes available time information. Expired data can be quickly identified after data authorization expires, to implement refined data destruction.

The first service data in this embodiment of this application may be data authorized by a user or a platform to a data processor for use, and there is a time limitation on using the first service data. To be specific, a subscriber who subscribes to the first service data can use the first service data in a specific period. The subscriber cannot use the first service data after the period, and the first service data is even required to be destroyed.

In a possible implementation, that the data management apparatus manages the first service data based on the first authorization information includes: The data management apparatus determines, based on the available time information, whether to delete the first service data or configure the first service data to be inaccessible.

In a possible implementation, that the data management apparatus determines, based on the available time information, whether to delete the first service data or configure the first service data to be inaccessible includes: If the data management apparatus determines that a current use time of the first service data is the same as an available time indicated by the available time information, or exceeds the available time indicated by the available time information, the data management apparatus determines to delete the first service data or configure the first service data to be inaccessible.

In a possible implementation, the current use time of the first service data is the same as the available time indicated by the available time information, or exceeds the available time indicated by the available time information. The method provided in this embodiment of this application further includes: The data management apparatus sends first prompt information to the subscriber who subscribes to the first service data, where the first prompt information is used to prompt that the current use time of the first service data is the same as the available time indicated by the available time information, or exceeds the available time indicated by the available time information. In this way, the subscriber who subscribes to the first service data can determine a reason why the first service data is inaccessible.

In a possible implementation, that the data management apparatus determines, based on the available time information, whether to delete the first service data or configure the first service data to be inaccessible includes: If the data management apparatus determines that a current use time does not reach an available time indicated by the available time information, the data management apparatus determines not to delete the first service data.

In a possible implementation, the method provided in this embodiment of this application includes: If the data management apparatus determines that the current use time of the first service data does not reach the available time indicated by the available time information, the data management apparatus sends second prompt information to the subscriber who subscribes to the first service data, where the second prompt information is used to prompt that the current use time of the first service data does not reach the available time indicated by the available time information. The second prompt information is further used to prompt a device having the first service data to delete the first service data when the use time of the first service data reaches the available time.

In a possible implementation, the first authorization information includes use permission information. In this way, in a subsequent migration process of the first service data, the use permission information of the first service data can be compared with a target location to which the service data is to be transferred, and service data beyond a use permission scope is filtered, to avoid unauthorized cross-border transfer of the first service data. This technology can accurately verify and filter a piece of data, to make data transfer verification more accurate.

In a possible implementation, that the data management apparatus manages the first service data based on the first authorization information includes: The data management apparatus determines, based on the use permission information, whether to send the first service data to the target location.

In a possible implementation, that the data management apparatus determines, based on the use permission information, whether to send the first service data to the target location includes: If the use permission information does not include the target location, the data management apparatus rejects sending the first service data to the target location. This prevents the service data from being migrated to an unauthorized location. Rejecting sending the first service data to the target location may be understood as filtering out the first service data in a process of migrating the first service data to the target location.

In a possible implementation, that the data management apparatus determines, based on the use permission information, whether to send the first service data to the target location includes: If the use permission information includes the target location, the data management apparatus allows sending the first service data to the target location.

In a possible implementation, the method provided in this embodiment of this application further includes: The data management apparatus establishes an association relationship between the first service data and information about a data processor of the first service data. In this way, the information about the data processor who processes the first service data can be determined. The data processors who process the service data can be queried and a data processing process can be traced.

In a possible implementation, the information about the data processor includes one or more of the following: a parser identifier, a parser name, a parser version number, a data type, or remark information.

In a possible implementation, the method provided in this embodiment of this application further includes: The data management apparatus establishes an association relationship between the first service data and information about the subscriber of the first service data. In this way, the information about the subscriber who subscribes to the first service data can be determined.

In a possible implementation, the method provided in this embodiment of this application further includes: The data management apparatus receives subscription information, where the subscription information carries an identifier of the first service data and the information about the subscriber of the first service data. The data management apparatus establishes the association relationship between the first service data and the information about the subscriber of the first service data based on the subscription information.

In a possible implementation, the first authorization information may further include basic information about an authorizer (for example, a country, a region, a city, and a name of the authorizer).

According to a second aspect, an embodiment of this application provides a data management apparatus. The data management apparatus may be a management device, or may be a chip or a chip system in the management device. The data management apparatus may include a processing unit and a communication unit. When the data management apparatus is the management device, the processing unit may be a processor, and the communication unit may be a communication interface or an interface circuit. The data management apparatus may further include a storage unit, and the storage unit may be a memory. The storage unit is configured to store instructions, and the processing unit executes the instructions stored in the storage unit, so that the data management apparatus implements the data management method described in any one of the first aspect or the possible implementations of the first aspect.

The data management apparatus includes the processing unit. The processing unit is configured to determine an association relationship between first service data and first authorization information based on an association relationship between a first source file and the first authorization information, where the first service data is data obtained based on the first source file. The processing unit is further configured to manage the first service data based on the first authorization information.

In a possible implementation, the first authorization information includes available time information.

The first service data in this embodiment of this application may be data authorized by a user or a platform to a data processor for use, and there is a time limitation on using the first service data. To be specific, a subscriber who subscribes to the first service data can use the first service data in a specific period. The subscriber cannot use the first service data after the period, and the first service data is even required to be destroyed.

In a possible implementation, the processing unit is specifically configured to determine, based on the available time information, whether to delete the first service data or configure the first service data to be inaccessible.

In a possible implementation, the processing unit is specifically configured to: if determining that a current use time of the first service data is the same as an available time indicated by the available time information, or exceeds the available time indicated by the available time information, the data management apparatus determines to delete the first service data or configure the first service data to be inaccessible.

In a possible implementation, the current use time of the first service data is the same as the available time indicated by the available time information, or exceeds the available time indicated by the available time information. The communication unit is configured to send first prompt information to the subscriber who subscribes to the first service data, where the first prompt information is used to prompt that the current use time of the first service data is the same as the available time indicated by the available time information, or exceeds the available time indicated by the available time information.

In a possible implementation, the processing unit is specifically configured to: if determining that a current use time does not reach an available time indicated by the available time information, determine not to delete the first service data.

In a possible implementation, the processing unit is configured to: if determining that the current use time of the first service data does not reach the available time indicated by the available time information, the processing unit sends, through the communication unit, second prompt information to the subscriber who subscribes to the first service data, where the second prompt information is used to prompt that the current use time of the first service data does not reach the available time indicated by the available time information. The second prompt information is further used to prompt a device having the first service data to delete the first service data when the use time of the first service data reaches the available time.

In a possible implementation, the first authorization information includes use permission information

In a possible implementation, the processing unit is specifically configured to determine, based on the use permission information, whether to send the first service data to a target location.

In a possible implementation, if the use permission information does not include the target location, the processing unit is configured to reject sending the first service data to the target location. This prevents the service data from being migrated to an unauthorized location.

In a possible implementation, if the use permission information includes the target location, the processing unit is configured to allow sending the first service data to the target location.

In a possible implementation, the processing unit is further configured to establish an association relationship between the first service data and information about a data processor of the first service data.

In a possible implementation, the information about the data processor includes one or more of the following: a parser identifier, a parser name, a parser version number, a data type, or remark information.

In a possible implementation, the communication unit is further configured to receive subscription information, where the subscription information carries an identifier of the first service data and information about the subscriber of the first service data. The data management apparatus establishes an association relationship between the first service data and information about the subscriber of the first service data based on the subscription information.

In a possible implementation, the first authorization information may further include basic information about an authorizer (for example, a country, a region, a city, and a name of the authorizer).

For example, when the data management apparatus is the chip or the chip system, the processing unit may be a processor, and the communication unit may be a communication interface. For example, the communication interface may be an input/output interface, a pin, a circuit, or the like. The processing unit executes instructions stored in a storage unit, so that the data management apparatus implements the data management method described in any one of the first aspect or the possible implementations of the first aspect. The storage unit may be a storage unit (for example, a register or a cache) in the chip, or may be a storage unit (for example, a read-only memory or a random access memory) that is outside the chip and that is in the data management apparatus.

According to a third aspect, an embodiment of this application provides a computer-readable storage medium. The computer-readable storage medium stores a computer program or instructions. When the computer program or the instructions is/are run on a computer, the computer is enabled to perform the data management method described in any one of the first aspect or the possible implementations of the first aspect.

According to a fourth aspect, an embodiment of this application provides a computer program product including instructions. When the instructions are run on a computer, the computer is enabled to perform the data management method described in the first aspect or the possible implementations of the first aspect.

According to a fifth aspect, an embodiment of this application provides a data management apparatus. The data management apparatus includes a processor and a storage medium. The storage medium stores instructions. When the instructions are run by the processor, the data management method described in the first aspect or the possible implementations of the first aspect is implemented.

According to a sixth aspect, this application provides a chip or a chip system. The chip or the chip system includes at least one processor and a communication interface. The communication interface and the at least one processor are interconnected through a line. The at least one processor is configured to run a computer program or instructions, to perform the data management method described in any one of the first aspect or the possible implementations of the first aspect.

According to a seventh aspect, an embodiment of this application provides a data management apparatus. The data management apparatus includes a processor and a memory that stores a computer-readable storage medium. The processor runs the computer-readable storage medium stored in the memory, to implement the data management method described in the first aspect or the possible implementations of the first aspect.

For beneficial effects of the second aspect to the seventh aspect and the implementations of the second aspect to the seventh aspect in this application, refer to analysis of beneficial effects in the first aspect and the implementations of the first aspect. Details are not described herein again.

### BRIEF DESCRIPTION OF DRAWINGS

FIG. 1 is a schematic flowchart of a data management method according to an embodiment of this application;
FIG. 2 is a processing flowchart of a data management method according to an embodiment of this application;
FIG. 3 is another schematic flowchart of a data management method according to an embodiment of this application;
FIG. 4 is a schematic diagram of a structure of a data management apparatus according to an embodiment of this application;
FIG. 5 is another schematic diagram of a structure of a data management apparatus according to an embodiment of this application;
FIG. 6 is a schematic diagram of a structure of a management device according to an embodiment of this application; and
FIG. 7 is a schematic diagram of a structure of a chip according to an embodiment of this application.

### DESCRIPTION OF EMBODIMENTS

To clearly describe technical solutions in embodiments of this application, words such as "first" and "second" are used in the embodiments of this application to distinguish between same items or similar items that have basically same functions and purposes. For example, first service data and second service data are merely used to distinguish different service data, and a sequence of the first service data and the second service data is not limited. A person skilled in the art may understand that the words such as "first" and "second" do not limit a quantity or an execution sequence, and the words such as "first" and "second" do not indicate a definite difference.

It should be noted that, in this application, a word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

In this application, "at least one" refers to one or more, and "a plurality of' refers to two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one (piece) of a, b, or c may represent: a, b, c; a and b; a and c; b and c; or a, b, and c; where a, b, and c may be singular or plural.

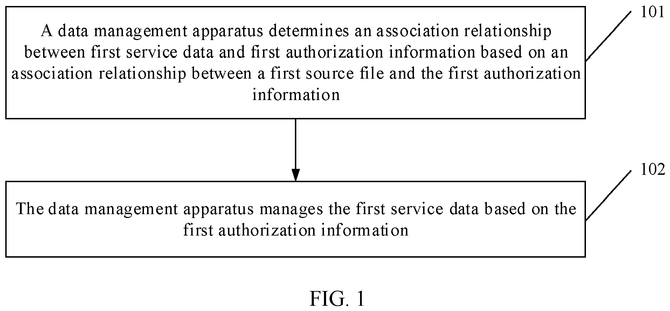

FIG. 1 shows a data management method according to an embodiment of this application. The method includes the following steps.

101: A data management apparatus determines an association relationship between first service data and first authorization information based on an association relationship between a first source file and the first authorization information.

The first service data is data obtained based on the first source file.

In this embodiment of this application, the association relationship between the first service data and the first authorization information may be established by the data management apparatus, or may be sent to the data management apparatus after another apparatus establishes the association relationship between the first service data and the first authorization information. This is not limited in this embodiment of this application.

It may be understood that, in this embodiment of this application, the first service data may be obtained by performing data parsing on the corresponding first source file. That is, the first source file is an original file of the first service data, and the first service data is obtained by parsing the first source file according to a specific service rule by the data management apparatus or the another apparatus.

For example, the first source file is identity card information (including a name, an identity card number, an address, and a date of birth) of a user. After the first source file is parsed, the obtained first service data may be [the name, the identity card number, the address, and the date of birth]; may be [the name and the identity card number]; or may be [the name and the date of birth].

Generally, the first source file may be authorized to a data processor. Therefore, authorization information of one or more pieces of service data obtained by parsing the same first source file is inherited from the first source file, and a plurality of pieces of service data obtained by parsing the same source file have the same authorization information.

The user or a platform storing the first source file may authorize the first source file to the data management apparatus. For example, the data management apparatus may be a data management apparatus in an operator. It should be understood that the operator may include a device managing the first service data, or may include a device storing the first service data.

In this embodiment of this application, the first service data may represent one or more of n pieces of service data.

102: The data management apparatus manages the first service data based on the first authorization information.

This embodiment of this application provides the data management method. In the method, the data management apparatus determines the association relationship between the first service data and the first authorization information based on the association relationship between the first source file and the first authorization information. In this way, authorization information can be associated with a service data granularity. Then, the data management apparatus manages the first service data based on the first authorization information associated with the first service data, so that each piece of service data can be accurately managed. This embodiment of this application may be applied to a legal and compliant use scenario of service data after the service data is authorized, and is used to quickly and accurately trace information such as a use scope, a validity period, and a user of the service data. Based on this technology, unauthorized use can be effectively limited.

In a possible implementation, step 101 in this embodiment of this application may be implemented in the following manners:
(a) The data management apparatus obtains an authorization information table, where the authorization information table includes at least one piece of authorization information (for example, the first authorization information). The authorization information table includes the at least one piece of authorization information and an identifier of each piece of authorization information. Specific content of the authorization information table is shown in Table 1.

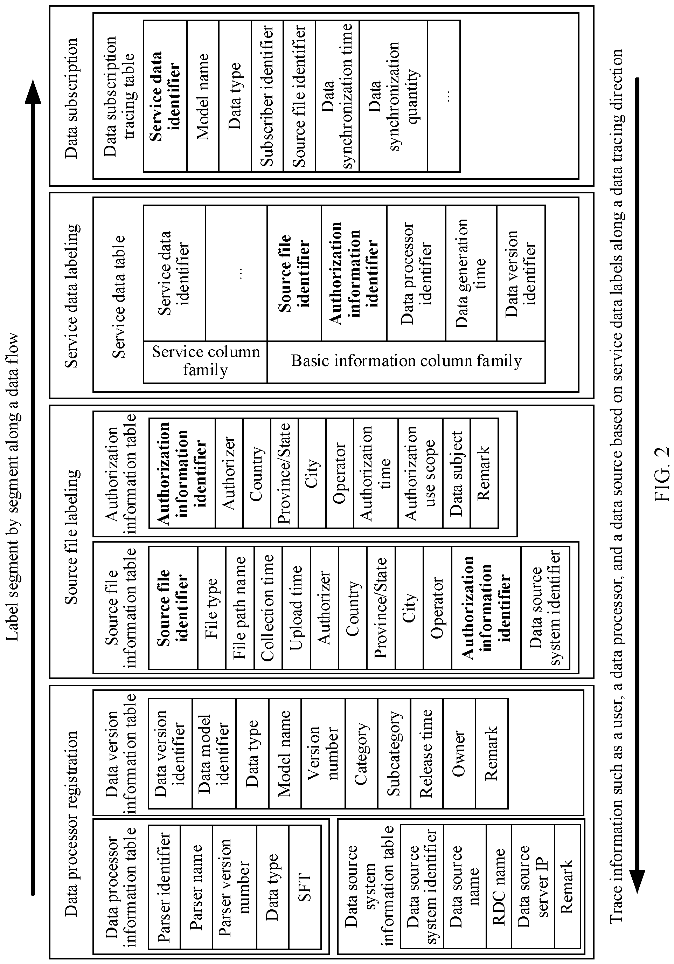

For example, as shown in FIG. 2, the first authorization information in this embodiment of this application may include available time information (which is also referred to as an authorization use time or an authorization expiration time) and/or use permission information. Further, as shown in FIG. 2, the first authorization information may further include an authorization identifier and basic information about an authorizer. For example, the basic information about the authorizer includes a country, a region (province/state), a city, and a name of the authorizer. Specifically, Table 1 shows specific content of the authorization information.

**Table 1 Specific content of the first authorization information**

| Authorization information identifier |
|---|
| Country |
| Province/State |
| City |
| Authorizer |
| Available time information |
| Use permission information |
| Authorization destination |
| Data subject |
| Remark |

The available time information is used to reflect a period or a time period in which the service data can be legally used. The available time information may be determined by using a start time and an end time, or the available time information may be determined by using a start time and a specified time period, or the available time information may be determined by using an end time.

The use permission information is used to limit a country, a region (province and city), a platform, and a function in which the service data can be legally used.

For example, the platform may include a payment platform, a communication platform, a social platform, an online banking platform, and a shopping platform.

For example, the first service data is the identity card number of the user, and a use permission indicated by the first authorization information is to apply for a telephone card. If the identity card number of the user is used to apply for the telephone card, the first service data is within the use permission described in the use permission information. If the identity card number of the user is used to perform a service other than applying for the telephone card, it indicates that the first service data is not within the use permission described in the use permission information.

For example, the first service data is identity information (including but not limited to a name, a certificate type, a certificate number, a domicile, a mobile phone number, and payment account information) of the user, and a function indicated by the first authorization information is to issue a bank card of an XX bank for the user. If the identity information of the user is used to issue the bank card of the XX bank for the user, the first service data is within the use permission described in the use permission information. If the identity card number of the user is used to perform a service other than issuing the bank card of the XX bank for the user, it indicates that the first service data is not within the use permission described in the use permission information.

(b) The data management apparatus adds an authorization label to the first source file. That is, the data management apparatus establishes a mapping relationship between the first source file and the authorization information table. In this way, the authorizer, a use permission scope, and the available time information of the first source file can be subsequently queried based on an identifier of the first source file. In addition, if there is a mapping relationship between each of a plurality of source files including the first source file and the authorization information table, source files whose validity period expires may also be queried based on the available time information.

(c) The data management apparatus performs data parsing and processing on the first source file, and adds a data processor label and an authorization information table label after the parsing is completed, that is, establishes a relationship between parsed result data and the data processor, and establishes a relationship table between the result data and the authorization information. A specific processor who processes the service data, a specific authorizer, an authorization scope, and an authorization expiration time of the service data can be easily queried based on a service data identifier at a fine granularity. In addition, related result data may be queried based on the authorization expiration time.

It should be noted that, as shown in FIG. 2, the data management apparatus may label the service data. The service data labeling may mean that the data management apparatus establishes a service data table shown in FIG. 2. The service data table includes the service data identifier and a basic information column family. The basic information column family includes information such as a source file identifier, a data processor identifier, a data generation time, and a data version number.

That is, the identifier of the first source file corresponding to the first service data may be carried in the first service data.

Table 2 shows a data structure of the first service data.

**Table 2 Data structure of the first service data**

| Service-related column family | | | Data label information column family | | | | |
|---|---|---|---|---|---|---|---|
| Service data identifier | ... | ... | Identifier of the first source file | Authorization information identifier | Information about the data processor | Data generation time | ... |

In this embodiment of this application, a manner in which the data management apparatus labels the first service data includes but is not limited to adding a label column to a database or forming an independent data label file.

The independent data label file means that an added data label and the service data are not stored in a same table or same space, and the added data label is stored as an independent file.

In an optional implementation, in this embodiment of this application, the data management apparatus may establish an association relationship between any one of the n pieces of service data and authorization information of a corresponding source file. A manner in which the data management apparatus determines the association relationship between each of the n pieces of service data and the authorization information of the corresponding source file is the same as a manner in which the data management apparatus determines the association relationship between the first service data and the first authorization information. Therefore, in this embodiment of this application, an example in which the data management apparatus determines the association relationship between the first service data and the first authorization information is used, and there is no indicative meaning.

Authorization information associated with different service data in the n pieces of service data is different, where n is a positive integer. The n pieces of service data may be service data obtained by parsing different source files, or may be service data obtained by parsing a same source file. This is not limited in this embodiment of this application.

In an optional implementation, authorization information associated with different service data may be the same or may be different. This is not limited in this embodiment of this application.

That authorization information associated with different service data is different may mean that available time information and use permission information associated with the different service data are both different. For example, available time information associated with service data 1 is a time 2, and use permission information associated with the service data 1 is an area A. Available time information associated with service data 2 is a time 1, and use permission information associated with the service data 2 is an area B.

That authorization information associated with different service data is different may mean that available time information associated with the different service data is the same, but use permission information associated with the different service data is different. For example, available time information associated with service data 1 and service data 2 is a time 2, but use permission information of the service data 1 is an area A and use permission information of the service data 2 is an area B.

That authorization information associated with different service data is different may mean that available time information associated with the different service data is different, but use permission information associated with the different service data is the same. For example, use permission information associated with service data 1 and service data 2 is an area B, but available time information of the service data 1 is a time 1 and available time information of the service data 2 is a time 2.

In a possible embodiment, for example, the first authorization information includes the available time information. Correspondingly, 102 in this embodiment of this application may be implemented in the following manner: The data management apparatus determines, based on the available time information, whether to delete the first service data or configure the first service data to be inaccessible.

In a possible implementation, that the data management apparatus determines, based on the available time information, whether to delete the first service data or configure the first service data to be inaccessible may be implemented in the following manner: If the data management apparatus determines that a current use time of the first service data is the same as an available time indicated by the available time information, or exceeds the available time indicated by the available time information, the data management apparatus determines to delete the first service data or configure the first service data to be inaccessible.

For example, if the current use time is December 30, 2019, and the available time indicated by the available time information is December 30, 2019, the data management apparatus determines to delete the first service data or configure the first service data to be inaccessible.

It should be noted that, in the available time information, a time unit may be any one of a second, a minute, a year, a month, or a day. This is not limited in this embodiment of this application.

In a possible implementation, the current use time of the first service data is the same as the available time indicated by the available time information, or exceeds the available time indicated by the available time information. The method provided in this embodiment of this application further includes: The data management apparatus sends first prompt information to a subscriber who subscribes to the first service data, where the first prompt information is used to prompt that the current use time of the first service data is the same as the available time indicated by the available time information, or exceeds the available time indicated by the available time information. In this way, the subscriber who subscribes to the first service data can determine a reason why the first service data is inaccessible.

In a possible implementation, that the data management apparatus determines, based on the available time information, whether to delete the first service data or configure the first service data to be inaccessible includes: If the data management apparatus determines that a current use time does not reach an available time indicated by the available time information, the data management apparatus determines not to delete the first service data, or determines to configure the first service data to be accessible and marks the available time until which the first service data can be accessed. In this way, the subscriber can learn of the available time of the first service data in a timely manner, and re-subscribe to the first service data before the available time of the first service data arrives.

In a possible implementation, the method provided in this embodiment of this application includes: If the data management apparatus determines that the current use time of the first service data does not reach the available time indicated by the available time information, the data management apparatus sends second prompt information to a subscriber who subscribes to the first service data, where the second prompt information is used to prompt that the current use time of the first service data does not reach the available time indicated by the available time information. The second prompt information is further used to prompt a device having the first service data to delete the first service data when the use time of the first service data reaches the available time.

Whether to delete the first service data or configure the first service data to be inaccessible is determined based on the available time information. In this way, the first service data can be processed in a timely manner, to implement accurate data tracing of data and data life cycle management at a fine granularity.

In this embodiment of this application, the data management apparatus may determine, based on the first authorization information associated with the first service data, whether the first service data is service data that is about to expire or expired service data.

The "service data that is about to expire" means that a current use time of the service data is earlier than an available time of the service data, and a difference between the current use time and the available time of the service data is less than a preset value. For example, a current use time of service data A is December 3, 2019, and an available time of the service data A is November 1, 2019 to December 5, 2019. Because a time difference between December 3, 2019 and December 5, 2019 is two days and is less than the preset value, the service data A is the service data that is about to expire. In this embodiment of this application, the service data that is about to expire may be calculated in years, months, days, hours, or minutes. For example, if a current use time of service data is one hour earlier than the available time information, the service data may be considered as the service data that is about to expire.

In this embodiment of this application, the "expired service data" means that the current use time of the service data exceeds the available time of the service data or is the same as the available time of the service data. That the current use time of the service data exceeds the available time of the service data means that the current use time of the service data is later than the available time of the service data.

In a possible implementation, the first service data is the expired service data, and the second prompt information is further used to prompt the device having the first service data to delete the first service data. Alternatively, the first service data is the service data that is about to expire, and the second prompt information is further used to prompt that when the use time of the first service data reaches the authorization use time, the device having the first service data deletes the first service data.

For the service data that is about to expire, the data management apparatus may configure the service data to be in an accessible state. For the expired service data, the data management apparatus may configure the expired service data to be inaccessible or delete the expired service data.

In a possible embodiment, for example, the authorization information is the use permission information. Correspondingly, 102 in this embodiment of this application may be implemented in the following manner: The data management apparatus determines, based on the use permission information, whether to send the first service data to a target location.

The use permission information is used to limit a use scope or a migration scope of the first service data.

In a possible implementation, that the data management apparatus determines, based on the use permission information, whether to send the first service data to a target location includes: If the use permission information does not include the target location, the data management apparatus rejects sending the first service data to the target location. This prevents the service data from being migrated to an unauthorized location. Rejecting sending the first service data to the target location may be understood as filtering out the first service data in a process of migrating the first service data to the target location.

For example, the first service data is service data a. A use permission described in use permission information of the service data a is only an area A. If the service data a is to be used in an area B or migrated to the area B in a subsequent process, the data management apparatus may reject the migration operation when the service data a is migrated to the area B. Alternatively, when a plurality of pieces of service data including the service data a need to be migrated to the area B, and only the use permission of the service data a is not in the area B, the data management apparatus may filter out the service data a.

In a possible implementation, that the data management apparatus determines, based on the use permission information, whether to send the first service data to a target location includes: If the use permission information includes the target location, the data management apparatus allows sending the first service data to the target location.

It should be noted that in this embodiment of this application, that the data management apparatus manages the first service data based on the first authorization information may further include: The data management apparatus updates the first authorization information of the first service data.

For example, the data management apparatus may extend or advance the available time of the first service data or change the use permission information of the first service data. For example, a use area of the first service data is changed from the area A to the area B. Specifically, if the authorization information of the first source file of the first service data is changed, the data management apparatus may update the first authorization information of the first service data based on updated authorization information of the first source file. Certainly, alternatively, the data management apparatus may independently determine to extend or advance the available time of the first service data or change the use permission information of the first service data.

Generally, to enable the subscriber to effectively use the first service data, if the data management apparatus receives a subscription request of the subscriber before the first service data is about to reach the available time described in the available time information, where the subscription request indicates that a subscription time of the first service data needs to be extended, the data management apparatus may determine to extend the available time of the first service data.

It should be noted that, because one piece of first service data may be subscribed to by a plurality of subscribers, if a subscriber a subscribes to the first service data and requests extension, the data management apparatus extends only the first service data subscribed to by the subscriber a. Even if a subscriber b subscribes to the same piece of first service data, an available period of the first service data subscribed to by the subscriber b remains unchanged.

In conclusion, the data management apparatus may establish a mapping relationship between each of the n pieces of service data and a corresponding associated source file. However, authorization information associated with different service data in the n pieces of service data may be different. When the service data is managed, the first service data that needs to be managed may be selected from the n pieces of service data. Therefore, in a possible implementation, the method provided in this embodiment of this application further includes: The data management apparatus determines the first service data from the n pieces of service data based on at least one piece of authorization information.

In a possible implementation, in this embodiment of this application, the data management apparatus may determine the first service data from the n pieces of service data based on the at least one piece of authorization information through the following process 1 and process 2 or the following process 3 and process 4.

Process 1: The data management apparatus obtains target authorization information from the at least one piece of authorization information, where an authorization use time indicated by the target authorization information is about to reach a first time or has exceeded the first time.

It may be understood that the first time is a preset time or a system time.

The data management apparatus has an authorization information table including one or more pieces of authorization information. The data management apparatus may periodically scan the authorization information table at a preset periodicity, compare an authorization use time indicated by each piece of authorization information in the authorization information table with the system time, and select authorization information that is about to expire or expired authorization information.

Process 2: The data management apparatus determines service data that is in the n pieces of service data and that has the target authorization information as the first service data. In other words, the first authorization information associated with the first service data is the same as the target authorization information.

For example, as shown in Table 2, the authorization information table of the data management apparatus includes authorization information 1 to authorization information 3, and an authorization use time corresponding to each piece of authorization information is shown in Table 3.

**Table 3 Authorization information table**

| Authorization information | Authorization use time | System time |
|---|---|---|
| Authorization information 1 | December 31, 2019 | December 3, 2019 |
| Authorization information 2 | December 18, 2019 | December 3, 2019 |
| Authorization information 3 | December 3, 2019 | December 3, 2019 |

The data management apparatus may determine, by scanning the authorization information table shown in Table 3 and comparing the authorization use time of each piece of authorization information and the system time, that the authorization information 3 is the expired authorization information and the authorization information 2 is the authorization information that is about to expire. Then, if authorization information carried in the service data A is the authorization information 3, the data management apparatus may determine that the service data A is the first service data.

In a possible implementation, in this embodiment of this application, the data management apparatus may determine the first service data from the n pieces of service data based on the at least one piece of authorization information in the following manners:
Process 3: The data management apparatus determines the available time information of each piece of service data based on the authorization information associated with each of the n pieces of service data.
Process 4: The data management apparatus determines, as the first service data, service data that is about to reach a first time or that has exceeded the first time and that is in the available time information corresponding to the n pieces of service data.

For example, the first time may be a system time. For example, as shown in Table 4, the n pieces of service data include service data 1 to service data 3, and an authorization use time of each piece of service data is shown in Table 4.

**Table 4 Service data**

| Service data | Available time information | System time |
|---|---|---|
| Service data 1 | December 31, 2019 | December 3, 2019 |
| Service data 2 | December 18, 2019 | December 3, 2019 |
| Service data 3 | December 3, 2019 | December 3, 2019 |

The data management apparatus may determine, by scanning the n pieces of service data and comparing the available time information of each piece of service data and the system time, that the service data 3 is the expired service data and the service data 2 is the service data that is about to expire. Therefore, the data management apparatus may determine that the first service data is the service data 3.

In a possible implementation, as shown in FIG. 2, the method provided in this embodiment of this application further includes: The data management apparatus establishes a mapping relationship between the first service data and information about the data processor. In this way, processing steps that are performed on the first service data can be quickly retrieved, and data processors who process the first service data can be directly queried, to facilitate tracing of a data processing process.

For example, the information about the data processor includes one or more of a parser identifier, a parser name, a parser version number, and a data type. In addition, the information about the data processor may further include data version information. For example, a data version includes one or more of a data version identifier, a data model identifier, a data type, a model name, a version number, a category, a subcategory, a release time, and an owner. In addition, the information about the data processor may further include a data source system information table, used to identify a data source system from which the source file is sourced. For example, the data source system table includes a data source system identifier and one or more of the following information: a data source name, a regional data center (Regional Data Center, RDC) name, a data source server IP, and remark information. An RDC indicates that data can only be stored in an authorized region or country.

In a possible implementation, as shown in FIG. 2, the method provided in this embodiment of this application further includes: The data management apparatus establishes a mapping relationship between the first service data and information about the subscriber who subscribes to the first service data. In this way, a subscriber who uses the first service data can be traced.

For example, the information about the subscriber may include a service data identifier, and one or more of the following information: a model name, a data type, a subscriber identifier, a source file identifier, a data synchronization time, and a data synchronization quantity.

For a plurality of pieces of service data, a mapping relationship between each of the plurality of pieces of service data and information about a subscriber of each piece of service data is established. In this way, if a subscriber A who subsequently uses the service data is different from a subscriber associated with the service data, the data management apparatus may disallow the subscriber A from using the service data. If a subscriber who subsequently subscribes to the service data is the same as the subscriber associated with the service data, the subscriber who subscribes to the service data has a permission to use the service data.

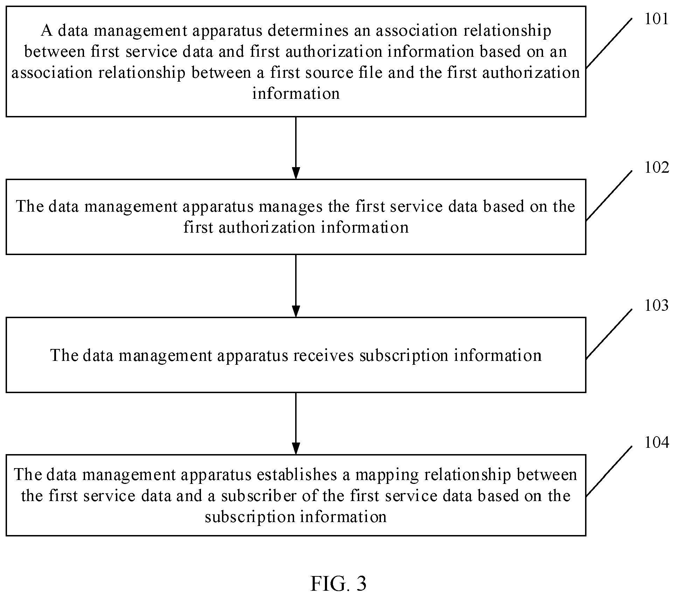

In a possible implementation, as shown in FIG. 3, the method provided in this embodiment of this application further includes the following steps.

103: The data management apparatus receives subscription information, where the subscription information carries an identifier of the first service data and the information about the subscriber of the first service data, and the first service data is any one of the n pieces of service data.

104: The data management apparatus establishes a mapping relationship between the first service data and the subscriber of the first service data based on the subscription information.

It should be noted that a mapping relationship between each piece of service data and the subscriber of each piece of service data is established in a same manner. Therefore, in this application, the first service data is used as an example to describe how to establish the mapping relationship between each piece of service data and the subscriber of each piece of service data.

The foregoing mainly describes the solution in this embodiment of this application from the perspective of interaction between network elements. It may be understood that, to implement the foregoing functions, each network element such as a data management apparatus includes corresponding hardware structures and/or software modules for implementing the functions. A person skilled in the art should be easily aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the data management apparatus may be divided into function units based on the foregoing the method examples. For example, function units may be divided based on corresponding functions, or two or more than two functions may be integrated into one processing unit. The integrated unit may be implemented in a form of hardware, or may be implemented in a form of a software function unit. It should be noted that in the embodiments of this application, division into units is an example, and is merely logical function division. During actual implementation, there may be another division manner.

The foregoing describes the method in this embodiment of this application with reference to FIG. 1 to FIG. 3. The following describes a data management apparatus that performs the foregoing method and that is provided in this embodiment of this application. A person skilled in the art may understand that the method and the apparatus may be mutually combined and referenced, and a data management apparatus provided in an embodiment of this application may perform steps performed by the data management apparatus in the foregoing data management method.

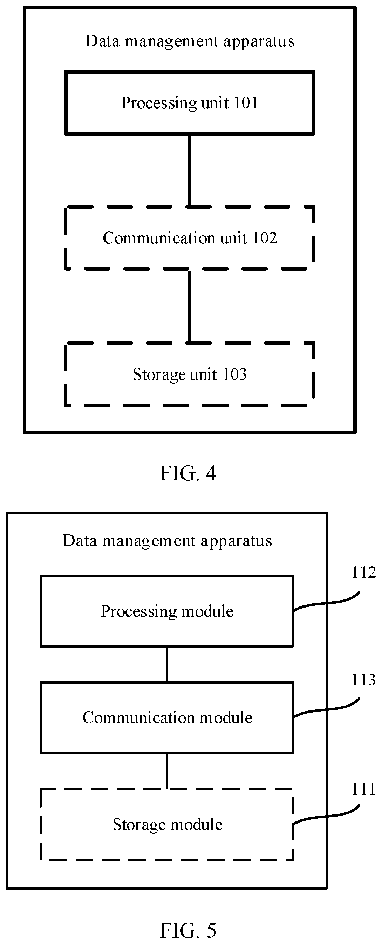

When an integrated unit is used, FIG. 4 shows the data management apparatus in the foregoing embodiment. The data management apparatus may include a processing unit 101.

The processing unit 101 is configured to support the data management apparatus in performing step 101 and step 102 in the foregoing embodiment.

In a possible embodiment, the data management apparatus may include: a communication unit 102 and a storage unit 103. The storage unit 103 is configured to store a mapping relationship between first service data and first authorization information, store a mapping relationship between a first source file and the first authorization information, store a mapping relationship between the first service data and information about a subscriber who subscribes to the first service data, and store a mapping relationship between the first service data and information about a data processor. The communication unit 102 is configured to support the data management apparatus in performing step 103 in the foregoing embodiment.

In a possible embodiment, the processing unit 101 is configured to support the data management apparatus in performing step 104 in the foregoing embodiment.

When an integrated unit is used, FIG. 5 shows a schematic diagram of a possible logical structure of the data management apparatus in the foregoing embodiment. The data management apparatus includes a processing module 112. The processing module 112 is configured to control and manage an action of the data management apparatus. For example, the processing module 112 is configured to perform an information/data processing step performed by the data management apparatus.

In a possible embodiment, the data management apparatus may further include a communication module 113, configured to support the data management apparatus in performing an information/data sending or receiving step.

In a possible embodiment, the data management apparatus may further include a storage module 111, configured to store program code and data of the data management apparatus. For example, the storage module 111 is configured to store a mapping relationship between first service data and first authorization information, a mapping relationship between a first source file and the first authorization information, a mapping relationship between the first service data and information about a subscriber who subscribes to the first service data, and a mapping relationship between the first service data and information about a data processor.

The processing module 112 is configured to support the data management apparatus in performing step 101 and step 102 in the foregoing embodiment.

In a possible embodiment, the processing module 112 is configured to support the data management apparatus in performing step 104 in the foregoing embodiment.

In a possible embodiment, the data management apparatus may further include a communication module 113, configured to support the data management apparatus in performing step 103 in the foregoing embodiment.

The processing module 112 may be a processor or a controller, for example, may be a central processing unit, a general-purpose processor, a digital signal processor, an application-specific integrated circuit, a field programmable gate array or another programmable logic device, a transistor logic device, a hardware component, or any combination thereof. The processor may implement or execute various examples of logical blocks, modules, and circuits described with reference to the content disclosed in this application. Alternatively, the processor may be a combination of processors implementing a computing function, for example, a combination of one or more microprocessors, or a combination of a digital signal processor and a microprocessor. The communication module 113 may be a transceiver, a transceiver circuit, a communication interface, or the like. The storage module 111 may be a memory.

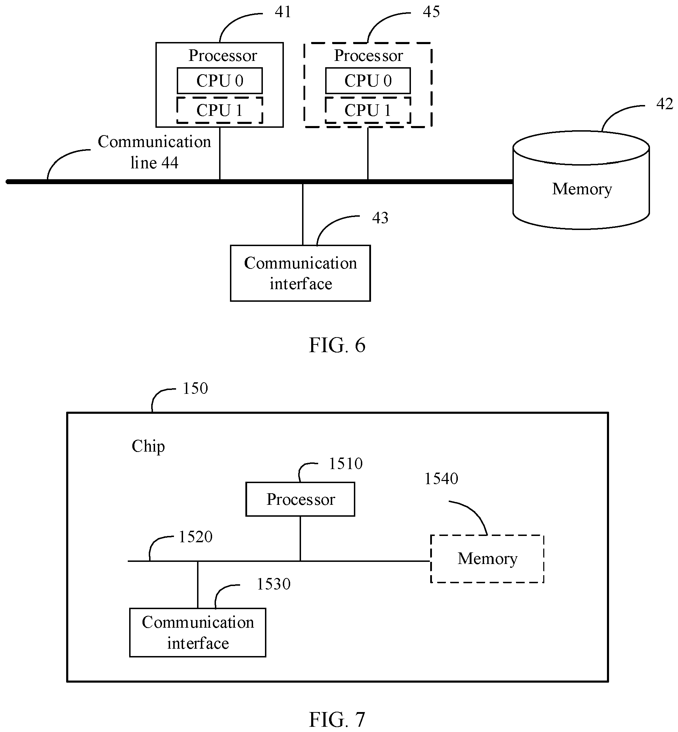

When the processing module 112 is a processor 41 or a processor 45, the communication module 113 is a communication interface 43, and the storage module 111 is a memory 42, the data management apparatus in this application may be a management device shown in FIG. 6.

FIG. 6 is a schematic diagram of a structure of a management device according to an embodiment of this application. For a structure of the data management apparatus, refer to the structure shown in FIG. 6. The management device includes the processor 41, a communication line 44, and at least one communication interface (FIG. 6 is described merely by using an example in which the management device includes the communication interface 43).

Optionally, the management device may further include the memory 42.

The processor 41 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 44 may include a path for transferring information between the foregoing components.

The communication interface 43 is configured to communicate with another device or a communication network such as the Ethernet, a radio access network (radio access network, RAN), or a wireless local area network (wireless local area network, WLAN) by using any apparatus such as a transceiver.

The memory 42 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer, but is not limited thereto. The memory may exist independently, and is connected to the processor through the communication line 44. The memory may alternatively be integrated with the processor.

The memory 42 is configured to store computer-executable instructions for performing the solutions in this application, and the processor 41 controls execution of the computer-executable instructions. The processor 41 is configured to execute the computer-executable instructions stored in the memory 42, to implement the data management method provided in the following embodiment of this application.

Optionally, the computer-executable instructions in this embodiment of this application may also be referred to as application program code. This is not specifically limited in this embodiment of this application.

During specific implementation, in an embodiment, the processor 41 may include one or more CPUs, such as a CPU 0 and a CPU 1 in FIG. 6.

During specific implementation, in an embodiment, the management device may include a plurality of processors, such as the processor 41 and a processor 45 in FIG. 6. Each of the processors may be a single-core (single-CPU) processor or a multi-core (multi-CPU) processor. The processor herein may be one or more devices, circuits, and/or processing cores configured to process data (for example, computer program instructions).

FIG. 7 is a schematic diagram of a structure of a chip 150 according to an embodiment of this application. The chip 150 includes one or more (including two) processors 1510 and a communication interface 1530.

Optionally, the chip 150 further includes a memory 1540. The memory 1540 may include a read-only memory and a random access memory, and provide operation instructions and data for the processor 1510. A part of the memory 1540 may further include a non-volatile random access memory (non-volatile random access memory, NVRAM).

In some implementations, the memory 1540 stores the following element: an executable module or a data structure, a subset thereof, or an extended set thereof.

In this embodiment of this application, the operation instructions stored in the memory 1540 (where the operation instructions may be stored in an operating system) are invoked to perform a corresponding operation.

A possible implementation is a data management apparatus.

The processor 1510 controls a processing operation of a data management apparatus, and the processor 1510 may also be referred to as a central processing unit (central processing unit, CPU).

The memory 1540 may include a read-only memory and a random access memory, and provide instructions and data for the processor 1510. A part of the memory 1540 may further include an NVRAM. For example, in an application, the memory 1540, the communication interface 1530, and the memory 1540 are coupled together through a bus system 1520. The bus system 1520 may further include a power bus, a control bus, a status signal bus, and the like in addition to a data bus. However, for clear description, various buses are marked as the bus system 1520 in FIG. 7.

The method disclosed in the foregoing embodiment of this application may be applied to the processor 1510, or may be implemented by the processor 1510. The processor 1510 may be an integrated circuit chip and has a signal processing capability. In an implementation process, the steps in the foregoing method may be implemented by using a hardware integrated logical circuit in the processor 1510, or by using instructions in a form of software. The processor 1510 may be a general-purpose processor, a digital signal processor (digital signal processor, DSP), an ASIC, a field-programmable gate array (field-programmable gate array, FPGA) or another programmable logic device, a discrete gate or a transistor logic device, or a discrete hardware component. The processor may implement or perform the methods, the steps, and logical block diagrams that are disclosed in the embodiments of this application. The general-purpose processor may be a microprocessor, or the processor may be any conventional processor or the like. The steps of the methods disclosed with reference to the embodiments of this application may be directly performed and completed by a hardware decoding processor, or may be performed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1540, and the processor 1510 reads information in the memory 1540 and completes the steps in the foregoing methods in combination with hardware of the processor 1510.

In a possible implementation, the communication interface 1530 is configured to perform receiving and sending steps of the data management apparatus in the embodiments shown in FIG. 1 or FIG. 3. The processor 1510 is configured to perform a processing step of the data management apparatus in the embodiments shown in FIG. 1 or FIG. 3.

The communication unit may be a communication interface of the apparatus, and is configured to receive a signal from another apparatus. For example, when the apparatus is implemented in a chip manner, the transceiver unit is a communication interface used by the chip to receive a signal from another chip or apparatus or send a signal to another chip or apparatus.

According to one aspect, a computer-readable storage medium is provided. The computer-readable storage medium stores instructions. When the instructions are run, functions of the data management apparatus in FIG. 1 to FIG. 3 are implemented.

According to one aspect, a computer program product including instructions is provided. The computer program product includes the instructions. When the instructions are run, functions of the data management apparatus in FIG. 1 to FIG. 3 are implemented.

According to one aspect, a chip is provided. The chip is used in a data management apparatus. The chip includes at least one processor and a communication interface. The communication interface is coupled to the at least one processor, and the processor is configured to run instructions, to implement functions of the data management apparatus in FIG. 1 to FIG. 3.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, all or some of the procedures or functions in the embodiments of this application are performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, the term "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a great effect.

Although this application is described with reference to specific features and the embodiments thereof, it is clear that various modifications and combinations may be made to them without departing from the spirit and scope of this application. Correspondingly, the specification and the accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. In this way, this application is intended to cover these modifications and variations of this application provided that they fall within the scope of the claims of this application and their equivalent technologies.

## Claims

1. A data management method, wherein the method comprises:
determining an association relationship between first service data and first authorization information based on an association relationship between a first source file and the first authorization information, wherein the first service data is data obtained based on the first source file; and
managing the first service data based on the first authorization information.

2. The data management method according to claim 1, wherein the first authorization information comprises available time information.

3. The data management method according to claim 2, wherein the managing the first service data based on the first authorization information comprises:
determining, based on the available time information, whether to delete the first service data or configure the first service data to be inaccessible.

4. The data management method according to any one of claims 1 to 3, wherein the first authorization information comprises use permission information.

5. The data management method according to claim 4, wherein the managing the first service data based on the first authorization information comprises:
determining, based on the use permission information, whether to send the first service data to a target location.

6. The method according to any one of claims 1 to 5, wherein the method further comprises:
establishing an association relationship between the first service data and information about a data processor of the first service data.

7. The method according to any one of claims 1 to 6, wherein the method further comprises:
establishing an association relationship between the first service data and information about a subscriber of the first service data.

8. The method according to claim 7, wherein the method further comprises:
receiving subscription information, wherein the subscription information carries an identifier of the first service data and the information about the subscriber of the first service data; and
establishing the association relationship between the first service data and the information about the subscriber of the first service data based on the subscription information.

9. A data management apparatus, wherein the apparatus comprises a memory and a processor, the memory stores computer-readable instructions, and the processor reads the computer-readable instructions stored in the memory, to perform the following operations:
determining an association relationship between first service data and first authorization information based on an association relationship between a first source file and the first authorization information, wherein the first service data is data obtained based on the first source file; and
managing the first service data based on the first authorization information.

10. The data management apparatus according to claim 9, wherein the first authorization information comprises available time information.

11. The data management apparatus according to claim 10, wherein the processor is specifically configured to determine, based on the available time information, whether to delete the first service data or configure the first service data to be inaccessible.

12. The data management apparatus according to any one of claims 9 to 11, wherein the first authorization information comprises use permission information.

13. The data management apparatus according to claim 12, wherein the processor is specifically configured to determine, based on the use permission information, whether to send the first service data to a target location.

14. The data management apparatus according to any one of claims 9 to 13, wherein the processor is further configured to:
establish an association relationship between the first service data and information about a data processor of the first service data.

15. The data management apparatus according to any one of claims 9 to 14, wherein the processor is further configured to:
establish an association relationship between the first service data and information about a subscriber of the first service data.

16. The data management apparatus according to claim 15, wherein the data management apparatus further comprises a communication interface, wherein
the communication interface is further configured to receive subscription information, wherein the subscription information carries an identifier of the first service data and the information about the subscriber of the first service data; and
the processor is further configured to establish the association relationship between the first service data and the information about the subscriber of the first service data based on the subscription information.

17. A computer-readable storage medium, wherein the computer-readable storage medium stores instructions;
and when the instructions are executed, the method according to any one of claims 1 to 8 is implemented.

18. A chip, wherein the chip comprises a processor and a communication interface, the communication interface is coupled to the processor, and the processor is configured to run a computer program or instructions, to implement the method according to any one of claims 1 to 8.

19. A data management apparatus, comprising a communication unit and a processing unit, wherein the communication unit is configured to perform message sending and receiving operations in the data management apparatus in the method according to any one of claims 1 to 8, and the processing unit runs instructions to perform a processing or controlling operation in the data management apparatus in the method according to any one of claims 1 to 8.
